# EUROPÄISCHE PATENTSCHRIFT

(11) **EP 2 611 594 B1**
(45) Veröffentlichungstag und Bekanntmachung des Hinweises auf die Patenterteilung: **30.05.2018**
(21) Anmeldenummer: 11752518.8
(22) Anmeldetag: 30.08.2011
(51) Int. Cl.: B32B 37/30, B01L 3/00, F16K 99/00

(54) **VERFAHREN ZUM HERSTELLEN EINER MIKROFLUIDISCHEN VORRICHTUNG SOWIE DIESBEZÜGLICHE LAMINIEREINRICHTUNGEN**
METHOD OF MAKING A MICROFLUIDIC DEVICE AND RELATED LAMINATING APPARATUS
PROCEDÉ DE FABRICATION D'UN DISPOSITIF MICROFLUIDIQUE ET APPAREIL DE LAMINAGE QUI Y SONT ASSOCIÉS

(30) Priorität: 01.09.2010 EP 10009072
(43) Veröffentlichungstag der Anmeldung: 10.07.2013
(73) Patentinhaber: Boehringer Ingelheim Microparts GmbH, 44227 Dortmund (DE)
(72) Erfinder: KUROWSKI, Dirk, 55216 Ingelheim Am Rhein (DE); PAUL, Oliver, 55216 Ingelheim am Rhein (DE)
(74) Vertreter: Simon, Elke Anna Maria
(86) Internationale Anmeldenummer: PCT/EP2011/064857
(87) Internationale Veröffentlichungsnummer: WO 2012/028595

(56) Entgegenhaltungen:
- EP-A1- 2 138 233
- EP-A1- 2 210 666
- EP-A2- 0 055 082
- WO-A1-94/26414
- DE-A1- 10 134 040
- GB-A- 2 445 738
- US-A1- 2006 057 030

## Beschreibung

Die vorliegende Erfindung betrifft ein Verfahren zum Herstellen einer insbesondere mikrofluidischen Vorrichtung, vorzugsweise zur Aufnahme oder Manipulation eines Fluids, wie einer Flüssigkeit, gemäß dem Oberbegriff des Anspruchs 1 oder 3 sowie Laminierungseinrichtungen für die Herstellung derartiger Vorrichtungen.

Die vorliegende Erfindung befaßt sich mit vorzugsweise mikrofluidischen Systemen bzw. Vorrichtungen. Die nachfolgenden Ausführungen beziehen sich insbesondere auf Vorrichtungen, bei denen Kapillarkräfte wirken und insbesondere für die Funktion entscheidend sind. Die vorliegende Erfindung bezieht sich aber auch auf Vorrichtungen, bei denen sonstige Kräfte, beispielsweise Zentrifugalkräfte und/oder Druckkräfte, wirken.

Aus der WO 2008/071351 A1 und EP 2 138 233 A1, die den Ausgangspunkt der vorliegenden Erfindung bilden, sind mikrofluidische Vorrichtungen mit Kammern insbesondere in Form von Kanälen bekannt, die durch eine dreidimensional geformte Folie zumindest partiell begrenzt und insbesondere elastisch deformierbar oder zusammendrückbar sind. Derartige Kammern bzw. Kanäle gestatten die Aufnahme und das Manipulieren, insbesondere Leiten, Mischen oder Fördern, von Fluiden, insbesondere Flüssigkeiten. Die dreidimensionale Formung der Folie erfolgt durch das Laminieren auf einen zugeordneten Träger, wobei die Folie von einer Maske mit einer Ausnehmung oder Durchbrechung auf den Träger unter Hitzeeinwirkung gepresst wird, so dass sich die Folie im Bereich der Ausnehmung bzw. Durchbrechung nicht mit dem Träger verbindet, sondern in diesem Nichtverbindungsbereich insbesondere selbstständig aufwölbt.

Das Laminieren der Folie auf den Träger erfolgt insbesondere unter Druck- und/oder Hitzeeinwirkung und umfasst insbesondere das so genannte Heißsiegeln. Der Begriff "Laminieren" kann im Sinne der vorliegenden Erfindung jedoch grundsätzlich auch ein sonstiges, insbesondere nur bereichsweises Verbinden der Folie mit dem Träger, beispielsweise durch Kleben, umfassen.

Gerade bei mikrofluidischen Vorrichtungen, bei denen die Folie nur bereichsweise mit dem zugeordneten Träger verbunden wird, kommt es auf ein sehr definiertes bzw. gleichmäßiges Verbinden in dem gewünschten Bereich und/oder auf ein Verhindern des Anhaftens der Folie in bestimmten Nichtverbindungsbereichen an.

Der vorliegenden Erfindung liegt daher die Aufgabe zugrunde, ein Verfahren zum Herstellen einer insbesondere mikrofluidischen Vorrichtung sowie eine Laminiereinrichtung anzugeben, wobei ein definiertes bzw. gleichmäßiges Verbinden der Folie mit einem zugeordneten Träger auf einfache Weise erreicht und/oder ein unerwünschtes Anhaften der Folie in einem Nichtverbindungsbereich auf dem Träger auf einfache Weise verhindert werden kann.

Die obige Aufgabe wird durch ein Verfahren gemäß Anspruch 1 oder 3 oder durch eine Laminiereinrichtung gemäß Anspruch 7, 9, 12 oder 14 gelöst. Vorteilhafte Weiterbildungen sind Gegenstand der Unteransprüche.

Ein Aspekt der vorliegenden Erfindung liegt darin, die dreidimensionale Formung der Folie im Nichtverbindungsbereich zu erleichtern oder unterstützen und/oder ein Anhaften der Folie im Nichtverbindungsbereich auf den Träger zu verhindern, indem die Folie während des Laminierens bzw. Verbindens durch trägerseitiges Einblasen von Gas im Nichtverbindungsbereich angehoben wird und/oder indem die Folie während des Laminierens bzw. Verbindens auf der dem Träger abgewandten Seite im Nichtverbindungsbereich entlüftet wird. Eine Laminiereinrichtung zur Realisierung dieses Verfahrens bzw. zum Verbinden einer Folie mit einem Träger ist dann derart ausgebildet, dass die Folie während des Verbindens durch trägerseitiges Einblasen von Gas gegen ein Anhaften im Nichtverbindungsbereich angehoben wird. Alternativ oder zusätzlich ist die Laminiereinrichtung derart ausgebildet, dass die Folie während des Verbindens auf der dem Träger abgewandten Seite im Nichtverbindungsbereich entlüftet wird und/oder dass eine Ausnehmung oder Durchbrechung in der die Folie gegen den Träger pressenden Maske entlüftet wird. Insbesondere ist also eine Entlüftung der Ausnehmung oder Durchbrechung der Maske vorgesehen. So kann die dreidimensionale Formung der Folie, insbesondere zur Bildung der gewölbten Kammerwand durch die Folie, unterstützt bzw. vereinfacht werden. In diesem Zusammenhang ist anzumerken, dass die dreidimensionale Formung vorzugsweise mindest im Wesentlichen ausschließlich oder maßgeblich durch das Laminieren als solches und nicht durch eine zusätzliche Einwirkung, wie das Einblasen von Gas oder Entlüften, erfolgt. Das Einblasen bzw. Zuführen von Gas dient insbesondere nur einem kurzzeitigen Anheben zur Verhinderung eines Anhaftens im Nichtverbindungsbereich, jedoch nicht der eigentlichen dreidimensionalen Formung der Folie.

Ein weiter Aspekt der vorliegenden Erfindung liegt darin, den Anpressdruck und/oder die Verbindung der Folie mit dem Träger zu vergleichsmäßigen, und zwar durch eine elastische Zwischenlage, die zwischen der Folie und einer zugeordneten Thermode und/oder zwischen dem Träger und einem zugeordneten Halter der Laminiereinrichtung angeordnet wird. Die Zwischenlage besteht insbesondere aus einem Elastomer. So kann auf einfache Weise eine deutliche Verbesserung bei dem Verbinden der Folie mit dem Träger, also beim Laminieren, ereicht werden. Insbesondere kann so eine wesentlich gleichmäßigere Verbindung der Folie mit dem Träger sichergestellt werden.

Eventuelle Unebenheiten oder Toleranzen können ausgeglichen werden. Entsprechend kann ein gleichmäßigeres Anpressen erreicht werden.

Gemäß einem anderem Aspekt der vorliegenden Erfindung weist die Laminiereinrichtung vorzugsweise eine Entlüftung der Ausnehmung oder Durchbrechung der Maske auf, so dass die Folie während des Verbindens auf der dem Träger abgewandten Seite im Nichtverbindungsbereich entlüftet wird. Dies ist wiederum der dreidimensionalen Formung der Folie zuträglich.

Vorzugsweise ist vorgesehen, eine flache und/oder nicht vorgeformte Folie auf einen Träger zu laminieren (also durch Hitze- und Druckeinwirkung) und aus der Folie eine allein durch das Laminieren dreidimensional geformte oder gewölbte Kammerwand zu bilden, die eine gewünschte Kammer zwischen Folie und Träger partiell begrenzt. Dies gestattet eine besonders einfache Herstellung.

Insbesondere wird zum Laminieren eine Maske mittels einer so genannten Thermode (beheizter Stempel) auf die Folie unter Hitzeeinwirkung gepresst. Die Maske weist mindestens eine Ausnehmung oder Durchbrechung auf, so dass vorzugsweise ausschließlich hierdurch die Folie im Bereich der Ausnehmung bzw. Durchbrechung - im Nichtverbindungsbereich - nicht mit dem Träger verbunden, sondern in diesem Bereich dreidimensional geformt bzw. strukturiert wird. In den anderen Bereichen wird die Folie jedoch vorzugsweise in üblicher Weise durch das Laminieren fest mit dem Träger verbunden. So kann auf sehr einfache Weise eine Strukturierung bzw. Formung der Folie erfolgen, um eine dreidimensionale Struktur, wie eine Kammer, für ein Fluid, wie eine Flüssigkeit, insbesondere zu deren Aufnahme und/oder Manipulation, zu bilden.

Unter dem Begriff "Kammer" ist bei der vorliegenden Erfindung insbesondere jede beliebige dreidimensionale Struktur - beispielsweise ein länglicher Kanal - zu verstehen, die vorschlagsgemäß herstellbar ist bzw. durch die dreidimensional geformte oder strukturierte Folie begrenzt wird und der Aufnahme von Flüssigkeit oder eines sonstigen Fluids, gegebenenfalls auch Gas, dient.

Die vorliegende Erfindung betrifft insbesondere nur mikrofluidische Vorrichtungen bzw. Strukturen bzw. deren Herstellung. Unter "mikrofluidisch" sind hier insbesondere nur Volumina der gesamten Vorrichtung oder der Kammer von weniger als 1 ml oder 500 µl, vorzugsweise weniger als 100 µl, besonders bevorzugt 10 µl oder weniger, zu verstehen.

Die genannten Aspekte und Merkmale sowie die sich aus der weiteren Beschreibung ergebenden Aspekte und Merkmale der vorliegenden Erfindung können unanhängig von einander, aber auch in beliebiger Kombination realisiert werden.

Weitere Vorteile, Merkmale, Eigenschaften und Aspekte der vorliegenden Erfindung ergeben sich aus den Ansprüchen und der folgenden Beschreibung einer bevorzugten Ausführungsform anhand der Zeichnung. Es zeigt:
- Fig. 1: einen schematischen Schnitt einer vorschlagsgemäß hergestellten Vorrichtung;
- Fig. 2: einen schematischen Schnitt einer vorschlagsgemäßen Laminiereinrichtung zur Herstellung der Vorrichtung;
- Fig. 3: eine perspektivische, explosionsartige Darstellung eines halterseitigen Aufbaus der Laminiereinrichtung;
- Fig. 4: eine perspektivische, explosionsartige Darstellung eines thermodenseitigen Aufbaus der Laminiereinrichtung.

In den Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist. Die Fig. sind zur Verdeutlichung verschiedener Aspekte und zur Erleichterung der Beschreibung nicht maßstabsgerecht.

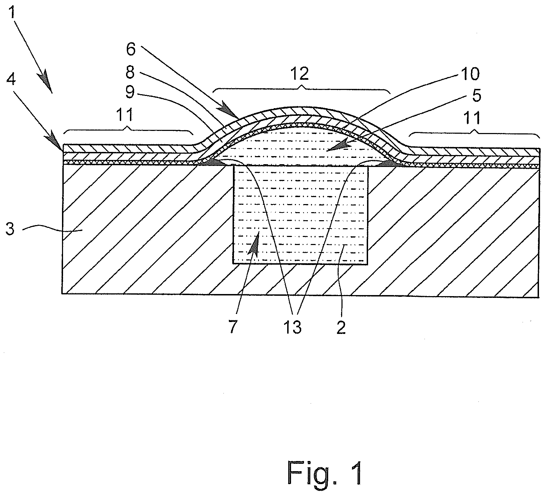

Fig. 1 zeigt in einer ausschnittsweisen, schematischen Draufsicht eine vorschlagsgemäß hergestellte, vorzugsweise mikrofluidische Vorrichtung 1 insbesondere zur Aufnahme, Analyse und/oder Manipulation eines Fluids, vorzugsweise einer Flüssigkeit 2.

Die Vorrichtung 1 weist einen Träger 3 und eine Folie 4 auf. Zwischen dem Träger 3 und der Folie 4 ist eine dreidimensionale fluidische Struktur zur Aufnahme bzw. Manipulation des Fluids gebildet. Insbesondere handelt es sich bei der Struktur um eine beispielsweise zumindest im Wesentlichen kanalförmige, längliche oder halbkugelige Kammer 5.

Die Struktur bzw. Kammer 5 ist zumindest teilweise durch eine Kammerwand 6 begrenzt, die in bzw. von der Folie 4 gebildet ist. Insbesondere ist der Träger 3 zumindest in diesem Bereich bzw. indem seitlich angrenzenden Oberflächenbereich flach bzw. eben - mit Ausnahme eventueller Zu- oder Ableitungen für das Fluid - ausgebildet, so dass die Struktur bzw. Kammer 5 im Wesentlichen oder quasi ausschließlich in der Folie 4 bzw. außerhalb des Trägers 3 oder oberhalb von dessen Flachseite gebildet ist.

Jedoch kann sich die Kammer 5 auch in den Träger 3 hineinerstrecken. Beispielsweise kann sich an die Kammer 5 eine fluidische Struktur im Träger 3, wie ein Kanal 7, der beispielsweise durch eine Vertiefung, Ausnehmung oder Durchbrechung gebildet ist, anschließen oder damit fluidisch in Verbindung stehen, wie beim Darstellungsbeispiel angedeutet. Die Kammer 5 erstreckt sich dann beispielsweise in den Träger 3 hinein oder steht mit anderen fluidischen Strukturen der Vorrichtung 1 bzw. des Trägers 3 in fluidischer Verbindung.

Der Träger 3 ist vorzugsweise aus Kunststoff, insbesondere Polystyrol, Cyclo-Olefin-Polymer, Cyclo-Olefin-Copolymer, Polymethylmethacrylat oder Polycarbonat, hergestellt oder gegossen.

Der Träger 3 ist vorzugsweise zumindest im Wesentlichen plattenförmig, flach, eben und/oder starr ausgebildet.

Die Folie 4 besteht vorzugsweise zumindest im Wesentlichen aus Kunststoff.

Die Folie 4 weist eine einschichtige oder mehrschichtige Deckschicht auf, die beim Darstellungsbeispiel aus zwei Folienschichten 8 und 9 gebildet bzw. aufgebaut sein kann. Die Deckschicht ist aus einen geeigneten Material, beispielsweise Polyethylen oder Polypropolen, hergestellt. Die einzelnen Folienschichten 8 und 9 können aus unterschiedlichen Materialien hergestellt sein.

Die Folie 4 ist vorzugsweise als so genannte Heißsiegelfolie ausgebildet. Sie weist daher vorzugsweise eine Schicht oder Beschichtung 10 aus Heißkleber, sogenanntem Siegellack oder Siegelfolie bzw. aus Klebstoff, insbesondere EVA, oder dergleichen auf. Mittels der Besichtung 10 kann die Folie 4 mit dem Träger 3 verbunden werden.

Der die Beschichtung 10 bildende Siegellack bzw. Klebstoff oder dergleichen weist vorzugsweise eine niedrigere Schmelz- oder Erweichungstemperatur als die Decksicht und/oder der Träger 3 bzw. dessen Oberflächenmaterial, insbesondere von etwa 70 bis 170° C, vorzugsweise etwa 80 bis 120° C, auf.

Die Folie 4 wird auf den Träger 3, insbesondere die Flachseite des Trägers 3, auflaminiert, also unter Druck- und Hitzeeinwirkung (vorzugsweise bei etwa 70 bis 170°C, insbesondere etwa 80 bis 120 °C) mit dem Träger 3 verbunden. Insbesondere erfolgt ein Heißsiegeln. Jedoch kann die Folie 4 auch auf sonstige geeignete Art und Weise mit dem Träger 3, beispielsweise Kleben oder Schweißen verbunden werden. Der Begriff "Laminieren" ist daher vorzugsweise entsprechend breit zu verstehen.

Vor dem Laminieren wird die flache Folie 4 vorzugsweise weder vorgeformt noch dreidimensional strukturiert oder dergleichen, um die dreidimensional geformte und/oder gewölbte Kammerwand 6 zu bilden. Vielmehr wird die Folie 4 erst durch das Laminieren derart verformt oder strukturiert, dass die dreidimensional geformte bzw. gewölbte Kammerwand 6 gebildet wird, insbesondere von dem Träger 3 weg gewölbt bzw. verformt wird und/oder insbesondere ohne Ausüben eines Drucks, beispielsweise Gasdrucks, auf die Kammerwand 6.

Das dreidimensionale Verformen bzw. Wölben der Kammerwand 6 wird vorzugsweise dadurch erreicht oder unterstützt, dass das Material der Beschichtung 10 zumindest teilweise aus einem Anpress- bzw. Verbindungsbereich 11 der Folie 4 mit dem Träger 3 in einen Nichtverbindungsbereich 12 (ein Bereich, in dem die Folie 4 nicht mit dem Träger 3 verbunden wird) bzw. in den Bereich der Kammerwand 6 verdrängt wird oder viskos fließt, insbesondere so dass ein Materialkeil 13 in diesen Übergangsbereich zwischen der Kammerwand 6 und dem Träger 3 gebildet wird, wie in Fig. 1 angedeutet.

Anstelle oder zusätzlich zu dem Material bzw. Klebstoff der Beschichtung 10 kann auch ein insbesondere viskoses Fließen bzw. Formen und/oder Verdrängen von Material der Deckschicht auftreten und den Materialkeil 13 bilden.

Die Folie 4 wird also beim Laminieren im Verbindungsbereich 11 auf den Träger 3 gepresst und dabei aufgrund der gleichzeitigen Hitzeeinwirkung mit dem Träger 3 - insbesondere vollflächig - verbunden bzw. verklebt. Im Nichtverbindungsbereich 12 wird die Folie 4 hingegen nicht auf den Träger 3 gepresst bzw. mit diesem verbunden.

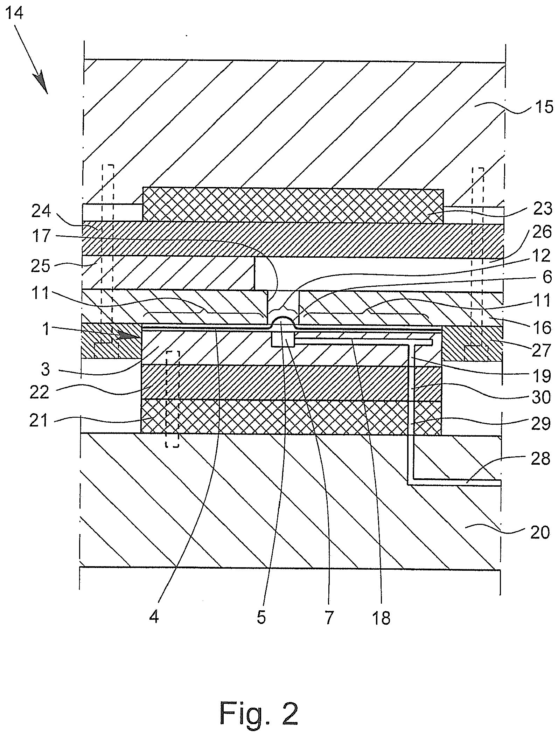

Fig. 2 zeigt nur schematisch die Vorrichtung 1 mit bereits auflaminierter Folie 4, wobei die Kammerwand 6 bereits dreidimensional geformt bzw. gewölbt ist.

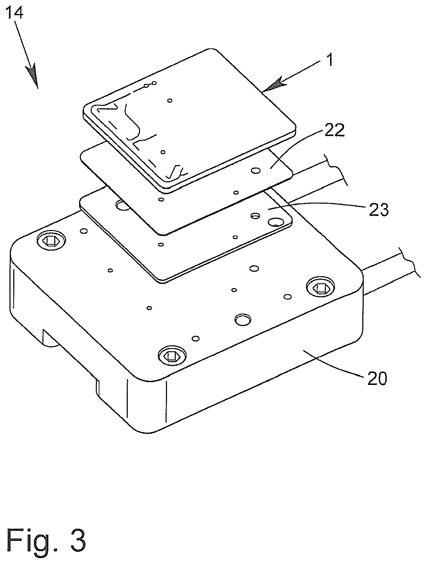

Nachfolgend wird eine vorschlagsgemäße Laminiereinrichtung 14 anhand der weiteren Figuren erläutert. Fig. 3 zeigt in einem schematischen, ausschnittsweisen Schnitt einen bevorzugten Aufbau der Laminiereinrichtung 14.

Das Laminieren erfolgt vorschlagsgemäß insbesondere mit einem beheizten Stempel bzw. einer so genannten Thermode 15 und insbesondere einer zugeordneten Maske 16, die beispielsweise von dem Stempel bzw. der Thermode 15 oder einem separaten Teil oder dergleichen gebildet ist. Bedarfsweise kann die Maske 16 auch von der Oberfläche einer Rolle oder Walze eines Rollenlaminators oder dergleichen gebildet sein.

Die Maske 16 weist vorzugsweise mindestens eine Ausnehmung oder Durchbrechung 17 im Nichtverbindungsbereich auf, so dass die Folie 4 in diesem Bereich nicht angepresst wird, sondern sich in die Maske 16 wölben kann.

Zum Laminieren wird die Maske 16 unter Hitzeeinwirkung auf die auf dem Träger 3 insbesondere zunächst lose aufliegende Folie 4 gepreßt. Hierdurch wird die Folie 4 vorzugsweise ausschließlich im Verbindungsbereich 11, jedoch nicht im Nichtverbindungsbereich 12 mit dem Träger 3 verbunden, sondern in diesem Bereich 12 dreidimensional geformt bzw. strukturiert, wie in Fig. 1 und 2 angedeutet. Überraschenderweise hat sich nämlich gezeigt, dass ohne zusätzlichen Verformungsschritt und insbesondere ohne Einsatz eines Blähmittels, von Druckgas oder dergleichen im Bereich der Ausnehmung bzw. Durchbrechung 17 der Maske 16 die Folie 4 aufgewölbt wird, wodurch die dreidimensional geformte bzw. gewölbte Kammerwand 6 gebildet wird, wie in Fig. 1 und 2 schematisch dargestellt.

Es ist anzumerken, dass die Folie 4 nicht notwendigerweise lose aufliegen muss. Das vorschlagsgemäße Verfahren kann auch bei einer etwas haftenden Folie 4 realisiert werden. Dies hat sogar den Vorteil, dass weniger Luftblasen beim Laminieren eingeschlossen werden.

Das vorschlagsgemäße dreidimensionale Verformen der Folie 4 kann insbesondere wahlweise mit einem nicht dargestellten Stempellaminator oder Rollenlaminator durchgeführt werden.

Das vorschlagsgemäße Laminieren ist insbesondere sehr einfach durchführbar, da zusätzliche Verformungsschritte entfallen. Die Maske 16 ist sehr einfach herstellbar, da insbesondere keine dreidimensionale Strukturierung der Maske 16 erforderlich ist. Vielmehr genügt es, eine oder mehrere Ausnehmungen bzw. Durchbrechungen 17 mit den gewünschten Konturen zu bilden.

Die vorschlagsgemäß in der Folie 4 gebildete Struktur bzw. Kammer 5 ist hier beispielsweise über den Kanal 7 und weitere Kanälen 18 und 19 der Vorrichtung 1 bzw. des Trägers 3 oder einer sonstigen fluidischen Struktur, einem fluidischen Bauelement oder dergleichen fluidisch verbunden oder angeschlossen. Beim Darstellungsbeispiel verläuft der Kanal 18 beispielsweise entlang der Flachseite des Trägers 3. Er kann beispielsweise durch eine Nut im Träger 3 gebildet sein, die insbesondere von der Folie 4 flach abgedeckt ist. Der Kanal 19 erstreckt sich beispielsweise senkrecht dazu und/oder endet offen nach außen, hier beispielsweise auf der Folie 4 abgewandten Flachseite des Trägers 3.

Die vorschlagsgemäße Vorrichtung 1 bildet insbesondere eine mikrofluidische Plattform bzw. ein mikrofluidisches System zur Aufnahme oder Manipulation eines Fluids, wie der Flüssigkeit 2.

Insbesondere ist die Kammer 5 bzw. die Kammerwand 6 elastisch oder reversibel verformbar. Die Rückstellung kann insbesondere aufgrund entsprechender Rückstellkräfte der Folie 4 bzw. Kammerwand 6 und/oder aufgrund eines in der Kammer 5 herrschenden Fluiddrucks erfolgen.

Zur Verformung kann beispielsweise ein nicht gezeigtes Teil oder Element, wie ein Stempel, eine Rolle, eine Walze, ein Schieber, ein sonstiger Aktuator oder dergleichen, auf die Kammerwand 6 einwirken. So kann beispielsweise ein Quetschventil oder eine Pumpe realisiert werden. Eine Betätigung bzw. Aktuatorik kann alternativ oder ergänzend auch realisiert werden, indem direkt oder indirekt mit einem Fluid (Flüssigkeit oder Gas) auf eine Wandung bzw. ein Ventil oder dergleichen gedrückt bzw. Druck ausgeübt wird und/oder ein Aktuator betätigt wird.

Es ist anzumerken, dass die vorschlagsgemäß ausgebildete Vorrichtung 1 für verschiedenste Zwecke, beispielsweise zur insbesondere gesteuerten Be- oder Entlüftung, eingesetzt und insbesondere auch mit sonstigen insbesondere mikrofluidischen Systemen, Bauelementen, wie Ventilen, Pumpen, Kapillarstops, Filtern, Detektionseinrichtungen oder dergleichen, kombiniert werden kann.

Es ist anzumerken, dass je nach Zusammendrücken der Kammer 5 auch eine Drosselung der fluidischen Verbindung erreichbar ist. Die vorschlagsgemäße Vorrichtung 1 ist insbesondere also nicht nur als Ventil sondern auch als Drossel oder sonstiges Element zur fluidischen Manipulation einsetzbar.

Je nach Bedarf kann die Folie 4 auch mehrere dreidimensional geformte oder gewölbte Kammerwände 6 verschiedener Kammern 5 bilden.

Wie bereits erwähnt, kann die Folie 4 auch eine sonstige fluidische Struktur oder alle sonstigen fluidischen im oder am Träger 3 abdecken oder bilden, wie eine Ausnehmung, eine Vertiefung, eine Durchbrechung, eine Nut, Kanäle und/oder mehrere Kammern 5 o. dgl.

Hinsichtlich möglicher fluidischer Strukturen und/oder Gestaltungen der Vorrichtung 1 wird ergänzend auf die Darstellungsbeispiele der WO 2008/071351 A und der EP 2 138 233 A1 verwiesen.

Hinsichtlich der für den Träger 3 und der Folie 4 einsetzbaren Materialien wird ergänzend auf die diesbezüglichen Ausführungen in der EP 2 138 233 A1 vollumfänglich verwiesen.

Hinsichtlich der bevorzugten Haftwerte, der bevorzugten Werte für den Pressdruck und der bevorzugten Zeitdauern beim Laminieren bzw. Heißsiegeln wird ergänzend auf die EP 2 138 233 A1 und die dort angegebene Werte verwiesen. Diese gelten vorzugsweise auch für die vorliegende Erfindung. Entsprechendes gilt auch für die angegebenen Volumina und Dimensionen der mikrofluidischen Strukturen bzw. Vorrichtung 1.

Die Laminiereinrichtung 14 weist vorzugsweise einen Halter 20 oder eine sonstige Einrichtung zur Widerlagerung des Trägers 3 auf. Fig. 3 zeigt in einer perspektivischen, explosionsartigen Ansicht den halterseitigen Aufbau der Laminiereinrichtung 14 - also des Halters 20, der ersten Zwischenlage 21 und des ersten Zwischenelements 22 - mit der Vorrichtung 1.

Zwischen dem Halter 20 und dem Träger 3 ist vorzugsweise eine erste elastische Zwischenlage 21 angeordnet. Die Zwischenlage 21 ist insbesondere aus einem geeigneten Kunststoff gebildet und/oder in Pressrichtung, beim Darstellungsbeispiel senkrecht zu ihrer Flächenerstreckung bzw. in Dickenrichtung elastisch nachgiebig. Um ein eventuelles Anhaften der ersten Zwischenlage 21 am Träger 3 auszuschließen und/oder ein eventuelles Durchbiegen oder sonstiges Verformen des Trägers 3 beim Laminieren auszuschließen oder zu minimieren, ist zwischen der ersten Zwischenlage 21 und dem Träger 3 vorzugsweise ein erstes Zwischenelement 22 angeordnet.

Das erste Zwischenelement 22 ist insbesondere als dünne Platte ausgeführt, besonders bevorzugt als Metallplatte. Die Dicke beträgt vorzugsweise weniger als 1 mm. Das erste Zwischenelement 22 weist vorzugsweise eine ausreichende Stabilität auf, um Kräfte zu übertragen bzw. zu verteilen. Andererseits ist das erste Zwischenelement 22 vorzugsweise ausreichend flexibel, um sich an Unebenheiten oder unterschiedliche Dicken anzupassen.

Hinsichtlich der Thermode 15 ist anzumerken, dass es sich hierbei um einen vorzugsweise elektrisch oder auf sonstige Art und Weise beheizten oder beheizbaren Stempel oder dergleichen handelt.

Die Thermode 15 und der Halter 20 sind relativ zueinander verstellbar, insbesondere um die Folie 4 mittels der darauf anliegenden Maske 16 gegen den Träger 3 pressen und dadurch mit diesem verbinden zu können.

Zwischen der Thermode 15 und der Maske 16 ist vorzugsweise eine zweite elastische Zwischenlage 23 angeordnet. Die zweite Lage 23 ist vorzugsweise ebenfalls wie die erste Zwischenlage 21 quer zu ihrer Flächenerstreckung bzw. Dickenrichtung elastisch nachgiebig. Insbesondere besteht die zweite Zwischenlage 23 auch aus einem geeigneten Kunststoff, Faserstoff oder dergleichen. Die erste und die zweite Zwischenlage 21 und 23 können aus dem gleichen Material oder aus unterschiedlichen Materialen hergestellt sein.

Die Dicke der ersten und/oder zweiten Zwischenlage 21, 23 beträgt vorzugsweise etwa 0,5 bis 5 mm, besonders bevorzugt etwa 1 bis 3 mm.

Zwischen der zweiten Zwischenlage 23 und der Maske 16 ist vorzugsweise ein zweites Zwischenelement 24 angeordnet, dass vorzugsweise wie das erste Zwischenelement 22 ausgebildet ist. Insbesondere handelt es sich auch beim zweiten Zwischenelement 24 um eine Metallplatte. Das zweite Zwischenelement 24 dient ebenfalls wie das erste Zwischenelement 22 einer Verteilung der Anpresskraft und/oder dem Anpassen an unterschiedliche Dicken oder dergleichen. Thermodenseitig bzw. folienseitig sind jedoch zwischen dem zweiten Zwischenelement 24 und der Folie 4 sowohl die Maske 16 als auch vorzugsweise ein Entlüftungselement 25 mit mindestens einem Entlüftungskanal 26 angeordnet.

Das Zwischenelement 22 und das zweite Zwischenelement 24 dienen insbesondere dazu, ein flexibles Maskenpaket zu erstellen, das sich an Höhenunterschiede bzw. Dickenunterschiede, beispielsweise an Einfallstellen, Durchbiegungen der Vorrichtung 1 bzw. des Trägers 3, Keilfehler oder dergleichen, anpassen kann. Alternativ oder zusätzlich dienen die Zwischenelemente 22 und 24 auch einer Abdeckung der elastischen Zwischenlagen 21 und 23 bzw. von diesen Zwischenlagen bildenden Elastomeren, insbesondere da diese ansonsten in unerwünschter Weise in sich anschließende Ausnehmungen "fließen" würden.

Es ist möglich, dass das Entlüftungselement 25 bzw. dessen mindestens ein Entlüftungskanal 26 auch in oder von der Maske 16 gebildet ist. In diesem Fall kann das Entlüftungselement 25 entfallen. Alternativ können die Maske 16, das Entlüftungselement 25 und/oder das zweite Zwischenelement 24 auch zu einer Baugruppe oder Baueinheit verbunden sein.

Durch das Vorsehen mindestens einer elastischen Zwischenlage 21, 23, vorzugsweise von elastischen Zwischenlagen auf beiden Seiten der Vorrichtung 1, und zwar einmal zwischen dem Träger 3 und dem Halter 20 und einmal zwischen der Thermode 15 und der Maske 16 wird eine Vergleichmäßigung des Anpressdrucks der Folie 4 auf dem Träger 3 beim Laminieren und/oder eine Vergleichmäßigung der Verbindung der Folie 4 mit den Träger 3 ermöglicht bzw. erreicht oder unterstützt. Dies ist einem definierten Verbinden der Folie 4 mit dem Träger 3 zuträglich. Weiter ist dies einer definierten Bildung von Materialkeilen 13 im Bereich der Kammerwand 6 und damit einem definierten Aufwölben der Kammerwand 6 zuträglich.

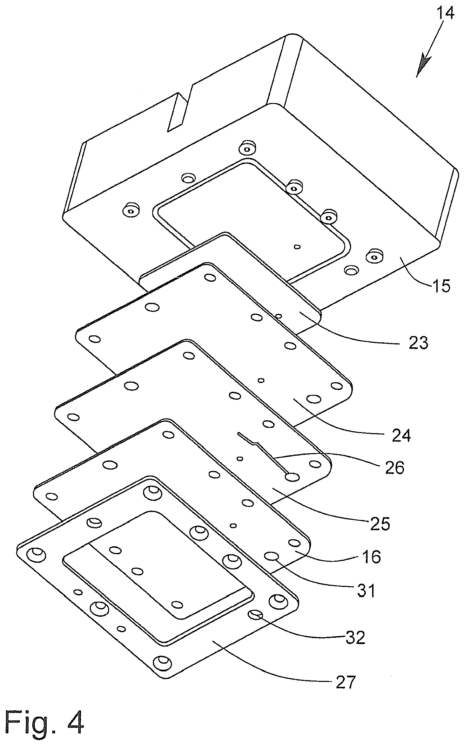

Fig. 4 zeigt in einer perspektivischen, explosionsartigen Darstellung den bevorzugten thermodenseitigen Aufbau der Laminiereinrichtung 14, nämlich die Thermode 15, die zweite Zwischenlage 23, das zweite Zwischenelement 24, das Entlüftungselement 25, die Maske 16 und ein optionales, vorzugsweise rahmenartiges Halteelement 27. Mittels des Halteelements 27 sind die Maske 16, das Entlüftungselement 25, das zweite Zwischenelement 24 und die zweite Zwischenlage 26 an der Thermode 15 - insbesondere in der Art eines Pakets - befestigbar, beispielsweise mittels in Fig. 2 gestrichelt angedeuteter Schrauben, die das Halteelement 27 mit der Thermode 15 verbinden. Hierbei durchgreifen die Schrauben entsprechende Löcher oder Führungsöffnungen in der Maske 16, im Entlüftungselement 25 und im zweiten Zwischenelement 24, so dass diese je nach Verformung der zweiten Zwischenlage 23 relativ zur Thermode 15 verschiebbar und/oder kippbar sind.

Das erste Zwischenelement 22 ist vorzugsweise ebenfalls relativ zum Halter 20 verschiebbar bzw. kippbar gehalten, beispielsweise mittels gestrichelt angedeuteter Stifte, die sich vom Halter 20 durch entsprechende Führungsöffnungen oder Löcher durch die erste Zwischenlage 21 in das erste Zwischenelement 22 erstrecken und ggf. auch die Vorrichtung 1 bzw. deren Träger 3 in Pressrichtung verschiebbar bzw. verstellbar halten oder führen.

Die zweite Zwischenlage 23 ist am Darstellungsbeispiel vorzugsweise in einer passenden Ausnehmung oder Vertiefung der Thermode 15 etwas eingelassen und dadurch seitlich geführt bzw. gehalten. Jedoch sind auch andere konstruktive Lösungen möglich.

Anstelle der thermodenseitigen Schraubenführung und/oder halterseitigen Stiftführung sind auch sonstige konstruktive Lösungen zum entsprechenden Führen und Halten möglich.

Der Einsatz der elastischen Zwischenlagen 21 und 23 bzw. die kippbare Lagerung der an der Vorrichtung 1 angreifenden Pressflächen oder mindestens einer Pressfläche, wie der Maske 16, und/oder die kippbare Widerlagerung des Trägers 3 führt bzw. führen zu einer Vergleichmäßigung des Anpressdrucks und/oder zu einem gleichmäßigeren Verbinden der Folie 4 am Träger 3, wobei dies auch unabhängig von einer dreidimensionalen Formung der Folie 4, also generell beim Laminieren bzw. bei der Herstellung von mikrofluidischen Vorrichtungen 1 realisiert werden kann. Eine entsprechend ausgebildete Laminiereinrichtung 14 ist also auch unabhängig von der dreidimensionalen Formung der Folie 4 bzw. Kammerwand 6 realisierbar.

Wie bereits erwähnt, erfolgt das Verbinden der Folie 4 mit dem Träger 3 - also das Laminieren - in einem Verbindungsschritt, bei dem die Folie 4 mittels der Maske 16 unter Hitzeeinwirkung auf den Träger 3 gepresst wird, wodurch die Folie 4 mit dem Träger 3 in den Verbindungsbereich 11, jedoch nicht in dem Nichtverbindungsbereich 12 im Bereich der mindestens eine Ausnehmung oder Durchbrechung 17 verbunden wird, insbesondere wobei die Folie 4 im Nichtverbindungsbereich 12 auch dreidimensional durch das Laminieren bzw. Anpressen bzw. Bilden von mindestens einen Materialkeil 13 dreidimensional geformt wird.

Vorzugsweise wird die Folie 4 während des Verbindungsschritts bzw. Laminierens durch trägerseitiges Einblasen von vorzugsweise inertem Gas, ggf. auch Druckluft, gegen ein Anhaften im Nichtverbindungsbereich 12 - zumindest kurzeitig oder impulsartig - angehoben. Hierdurch kann die dreidimensionale Formung der Kammerwand 6 unterstützt werden, wobei die dreidimensionale Formung jedoch nicht durch die Einleitung des Gases, sondern durch den Verbindungsschritt bzw. das Laminieren erfolgt.

Zur Zuleitung des Gases bzw. zum Einblasen ist die Laminierungseinrichtung 14 bzw. der Halter 20 vorzugsweise mit einer Gaszuführung 28 zur Zuleitung von Gas zum Träger 3 versehen. Alternativ oder zusätzlich weist die erste Zwischenlage 21 und/oder das erste Zwischenelement 22 eine Gasdurchführung 29 bzw. 30 zur Zuleitung von Gas zum Träger 3 auf.

Die Zuleitung des Gases erfolgt insbesondere durch im Träger 3 ohnehin vorhandene oder hierfür speziell vorgesehene Kanäle 19, 18 und 7, die mit der Kammer 5 bzw. der Kammerwand 6 bzw. dem Nichtverbindungsbereich 12 der Folie 4 trägerseitig fluidisch in Verbindung stehen.

Zusätzlich oder alternativ zu dem vorgenannten Einblasen bzw. Zuführen von Gas, insbesondere zum Anheben der Folie 4 im Nichtverbindungsbereich 12, wird die Folie 4 während des Verbindungsschritts bzw. generell auf der dem Träger 3 abgewandten Seite im Nichtverbindungsbereich 12 bzw. im Bereich der Ausnehmung/Durchbrechung 17 entlüftet. Dies ist wiederum der dreidimensionalen Formung der Kammerwand 6 zuträglich. Insbesondere kann so verhindert werden, dass ein sich ansonsten aufbauender Gegendruck der gewünschten dreidimensionalen Formung oder Wölbung der Kammerwand 6 während des Laminierens bzw. Verbindens mit dem Träger 3 entgegenwirkt.

Alternativ oder zusätzlich kann ein Unterdruck entlüftungsseitig angelegt werden. Dies kann das Anheben der Folie 4 im Nichtverbindungsbereich 12 ebenfalls unterstützen.

Die vorzugsweise vorgesehene Zuleitung von Gas bzw. Luft muss nicht, wie beim Darstellungsbeispiel vorgesehen, von unten erfolgen, sondern kann beispielsweise auch von oben, also beispielsweise auch thermodenseitig erfolgen.

Die vorgenannte Entlüftung wird insbesondere dadurch realisiert, dass die Ausnehmung bzw. Durchbrechung 17 der Maske 16 entlüftet wird. Die Laminiereinrichtung 14 weist also vorzugsweise eine Entlüftung der Ausnehmung oder Durchbrechung 17 auf. Diese Entlüftung wird beim Darstellungsbeispiel durch das Entlüftungselement 25 mit mindestens einem Entlüftungskanal 26 realisiert. Der Entlüftungskanal 26 steht mit der Ausnehmung bzw. Durchbrechung 17 einerseits und der Umgebung anderseits in Kontakt. Jedoch sind hier auch andere konstruktive Lösungen möglich. Beispielsweise kann die Entlüftung alternativ oder zusätzlich durch die Maske 16 und/oder das zweite Zwischenelement 24 erfolgen. Alternativ oder zusätzlich kann die Entlüftung auch durch entsprechende Bohrungen oder Durchbrechungen 31 und 32 in der Maske 16 und dem Halteelement 27 erfolgen, über die der Entlüftungskanal 26 mit der Umgebung in Verbindung stehen kann, wie in der perspektivischen Darstellung in Fig. 4 angedeutet.

Generell können die verschiedenen Merkmale, Aspekte und Varianten auch beliebig miteinander kombiniert werden.

### Bezugszeichenliste:

- 1: Vorrichtung
- 2: Flüssigkeit
- 3: Träger
- 4: Folie
- 5: Kammer
- 6: Kammerwand
- 7: Kanal
- 8: Folienschicht
- 9: Folienschicht
- 10: Beschichtung
- 11: Verbindungsbereich
- 12: Nichtverbindungsbereich
- 13: Materialkeil
- 14: Laminiereinrichtung
- 15: Thermode
- 16: Maske
- 17: Durchbrechung
- 18: Kanal
- 19: Kanal
- 20: Halter
- 21: erste Zwischenlage
- 22: erstes Zwischenelement
- 23: zweite Zwischenlage
- 24: zweites Zwischenelement
- 25: Entlüftungselement
- 26: Entlüftungskanal
- 27: Halteelement
- 28: Gaszuleitung
- 29: Gasdurchführung
- 30: Gasdurchführung
- 31: Entlüftungsöffnung
- 32: Entlüftungsöffnung

## Patentansprüche

1. Verfahren zum Herstellen einer mikrofluidischen Vorrichtung (1), wobei eine Folie (4) in einem Verbindungsschritt mittels einer Maske (16) mit mindestens einer Ausnehmung oder Durchbrechung (17) unter Hitzeeinwirkung auf einen Träger (3) gepresst wird, wodurch die Folie (4) mit dem Träger (3) in einem Verbindungsbereich (11), jedoch nicht in einem Nichtverbindungsbereich (12) im Bereich der mindestens einen Ausnehmung oder Durchbrechung (17) verbunden wird und wobei die Folie (4) durch die Ausnehmung oder Durchbrechung (17) der Maske im Nichtverbindungsbereich (12) während des Verbindungsschritts dreidimensional geformt wird
**und** wobei die Folie (4) während des Verbindungsschnitts auf der dem Träger (3) abgewandten Seite im Nichtverbindungsbereich (12) entlüftet wird.

2. Verfahren zum Herstellen einer mikrofluidischen Vorrichtung (1), nach Anspruch 1, wobei eine Folie (4) in einem Verbindungsschritt von einer Thermode (15) und einer zugeordneten Pressfläche oder Maske (16) unter Hitzeeinwirkung auf einen Träger (3) gepresst wird, wodurch die Folie (4) mit dem Träger (3) verbunden wird, wobei der Träger (3) von einem Halter (20) während des Verbindungsschritts widergelagert wird,
**dadurch gekennzeichnet,**
**dass** eine erste elastische Zwischenlage (21) zwischen dem Träger (3) und dem Halter (20) und eine zweite elastische Zwischenlage (23) zwischen der Thermode (15) einerseits und der Pressfläche oder Maske (16) andererseits jeweils zur Vergleichmäßigung des Anpressdrucks und der Verbindung der Folie (4) mit dem Träger (3) eingesetzt wird.

3. Verfahren nach Anspruch 2, **dadurch gekennzeichnet, dass** die Maske (16) mindestens eine Ausnehmung oder Durchbrechung (17) aufweist, wodurch die Folie (4) mit dem Träger (3) in einem Verbindungsbereich (11), jedoch nicht in einem Nichtverbindungsbereich (12) im Bereich der Ausnehmung oder Durchbrechung (17) verbunden wird, wobei oder wodurch die Folie (4) im Nichtverbindungsbereich (12) dreidimensional geformt oder strukturiert wird.

4. Verfahren nach den Ansprüchen 1 und 2, **dadurch gekennzeichnet, dass** das Gas durch die zweite Zwischenlage (23) hindurch entlüftet wird.

5. Verfahren nach einem der Ansprüche 2 bis 4, **dadurch gekennzeichnet, dass** die erste und zweite Zwischenlage (21, 23) aus Kunststoff oder einem Elastomer hergestellt ist oder besteht.

6. Laminiereinrichtung (14) zum Verbinden einer Folie (4) mit einem Träger (3) nach einem Verfahren gemäß einem der Ansprüche 1 bis 5 wobei die Laminiereinrichtung (14) eine Thermode (15) und eine zugeordnete Maske (16) zum Pressen der Folie (4) unter Hitzeeinwirkung auf den Träger (3) sowie einen Halter (20) zum Widerlagern des Trägers (3) aufweist, wobei die Folie (4) mit dem Träger (3) in einem Verbindungsbereich (11), jedoch nicht in einem Nichtverbindungsbereich (12) im Bereich mindestens einer Ausnehmung oder Durchbrechung (17) der Maske (16) verbindbar ist und dabei die Folie (4) im Nichtverbindungsbereich (12) dreidimensional geformt wird,
**dadurch gekennzeichnet,**
**dass** die Laminiereinrichtung (14) eine Entlüftung der Ausnehmung oder Durchbrechung (8) aufweist, so dass die Folie (4) während des Verbindens auf der dem Träger (3) abgewandten Seite im Nichtverbindungsbereich (12) entlüftet wird.

7. Laminiereinrichtung nach Anspruch 6, **dadurch gekennzeichnet, dass** die Thermode (15) oder ein zwischen der Thermode (15) und dem Halter (20) angeordnetes Entlüftungselement (25) mindestens einen Entlüftungskanal (26) als Entlüftung aufweist.

8. Laminiereinrichtung (14) zum Verbinden einer Folie (4) mit einem Träger (3), nach einem der Ansprüche 6 bis 7, wobei die Laminiereinrichtung (14) eine Thermode (15) und eine zugeordnetete Pressfläche oder Maske (16) zum Pressen der Folie (4) unter Hitzeeinwirkung auf den Träger (3) sowie einen Halter (20) zum Widerlagern des Trägers (3) aufweist, **dadurch gekennzeichnet, dass** die Laminiereinrichtung (14) eine zweite elastische Zwischenlage (23) zwischen der Thermode (15) einerseits und der Pressfläche oder Maske (16) andererseits zur Vergleichmäßigung des Anpressdrucks und der Verbindung der Folie (4) mit dem Träger (3) aufweist.

9. Laminiereinrichtung nach den Ansprüchen 7 und 8, **dadurch gekennzeichnet, dass** die zweite Zwischenlage (23) zwischen dem Entlüftungselement (25) und der Thermode (15) angeordnet ist.

## Claims

1. Method for producing a microfluidic device (1), wherein a film (4) is pressed onto a substrate (3) under the effect of heat in a joining step by means of a mask (16) comprising at least one recess or opening (17), as a result of which the film (4) is joined to the substrate (3) in a joining region (11), but not in a non-joining region (12) in the region of the at least one recess or opening (17), and wherein the film (4) is three-dimensionally shaped during the joining step by means of the recess or opening (17) in the mask in the non-joining region (12), and wherein the film (4) is deaerated during the joining step on the side facing away from the substrate (3) in the non-joining region (12).

2. Method for producing a microfluidic device (1) according to claim 1, wherein a film (4) is pressed onto a substrate (3) under the effect of heat in a joining step by a thermode (15) and an associated pressing surface or mask (16), as a result of which the film (4) is joined to the substrate (3), the substrate (3) being braced by a holder (20) during the joining step, **characterised in that** a first resilient intermediate layer (21) is inserted between the substrate (3) and the holder (20) and a second resilient intermediate layer (23) is inserted between the thermode (15) and the pressing surface or mask (16), in each case in order to equalise the contact pressure and to render uniform the join of the film (4) to the substrate (3).

3. Method according to claim 2, **characterised in that** the mask (16) comprises at least one recess or opening (17), by means of which the film (4) is joined to the substrate (3) in a joining region (11), but not in a non-joining region (12) in the region of the recess or opening (17), during which or as a result of which the film (4) is three-dimensionally shaped or structured in the non-joining region (12).

4. Method according to claims 1 and 2, **characterised in that** the gas is expelled through the second intermediate layer (23).

5. Method according to any one of claims 2 to 4, **characterised in that** the first and second intermediate layers (21, 23) are produced from or consist of a plastics material or an elastomer.

6. Laminating apparatus (14) for joining a film (4) to a substrate (3) using a method according to any one of claims 1 to 5, the laminating apparatus (14) comprising a thermode (15) and an associated mask (16) for pressing the film (4) onto the substrate (3) under the effect of heat, and a holder (20) for bracing the substrate (3), wherein the film (4) can be joined to the substrate (3) in a joining region (11), but not in a non-joining region (12) in the region of at least one recess or opening (17) in the mask (16), and the film (4) in the process being three-dimensionally shaped in the non-joining region (12), **characterised in that** the laminating apparatus (14) comprises a deaeration system for the recess or opening (8), such that the film (4) is deaerated during joining on the side facing away from the substrate (3) in the non-joining region (12).

7. Laminating apparatus according to claim 6, **characterised in that** the thermode (15) or a deaeration element (25) arranged between the thermode (15) and the holder (20) comprises at least one deaeration channel (26) as the deaeration system.

8. Laminating apparatus (14) for joining a film (4) to a substrate (3) according to either claim 6 or claim 7, the laminating apparatus (14) comprising a thermode (15) and an associated pressing surface or mask (16) for pressing the film (4) onto the substrate (3) under the effect of heat, and a holder (20) for bracing the substrate (3), **characterised in that** the laminating apparatus (14) comprises a second resilient intermediate layer (23) between the thermode (15) and the pressing surface or mask (16) for equalising the contact pressure or for rendering uniform the join of the film (4) to the substrate (3).

9. Laminating apparatus according to claims 7 and 8, **characterised in that** the second intermediate layer (23) is arranged between the deaeration element (25) and the thermode (15).

## Revendications

1. Procédé de fabrication d'un dispositif microfluidique (1), dans lequel un film (4) est pressé dans une étape de raccordement, au moyen d'un masque (16) avec au moins un évidement ou une interruption (17), sous l'action de la chaleur, sur un support (3), par quoi le film (4) est raccordé au support (3) dans une zone de raccordement (11), toutefois pas dans une zone de non raccordement (12) dans la zone de l'au moins un évidement ou une interruption (17) et dans lequel le film (4) est formé en trois dimensions par l'évidement ou l'interruption (17) du masque dans la zone de non raccordement (12) pendant l'étape de raccordement
et dans lequel le film (4) est ventilé pendant l'étape de raccordement sur le côté éloigné du support (3) dans la zone de non raccordement (12).

2. Procédé de fabrication d'un dispositif microfluidique (1) selon la revendication 1, dans lequel un film (4) est pressé dans une étape de raccordement par une thermode (15) et une surface de pressage ou masque associé (16), sous l'action de la chaleur, sur un support (3), par quoi le film (4) est raccordé au support (3), dans lequel le support (3) est abouté par un soutien (20) pendant l'étape de raccordement,
**caractérisé en ce**
**qu'**une première couche intermédiaire élastique (21) est insérée entre le support (3) et le soutien (20) et une seconde couche intermédiaire élastique (23) entre la thermode (15) d'une part et la surface de pressage ou le masque (16) d'autre part, respectivement pour l'homogénéisation de la pression de serrage et le raccordement du film (4) avec le support (3).

3. Procédé selon la revendication 2, **caractérisé en ce que** le masque (16) présente au moins un évidement ou une interruption (17), par quoi le film (4) est raccordé au support (3) dans une zone de raccordement (11), toutefois pas dans une zone de non raccordement (12) dans la zone de l'évidement ou de l'interruption (17), dans lequel ou par quoi le film (4) est formé ou structuré en trois dimensions dans la zone de non raccordement (12).

4. Procédé selon les revendications 1 et 2, **caractérisé en ce que** le gaz est ventilé au travers de la seconde couche intermédiaire (23).

5. Procédé selon l'une quelconque des revendications 2 à 4, **caractérisé en ce que** la première et seconde couche intermédiaire (21, 23) sont fabriquées ou se composent de matière plastique ou d'un élastomère.

6. Appareil de laminage (14) pour le raccordement d'un film (4) avec un support (3) selon un procédé selon l'une quelconque des revendications 1 à 5, dans lequel l'appareil de laminage (14) présente une thermode (15) et un masque (16) associé pour le pressage du film (4) sous l'action de la chaleur, sur le support (3), ainsi qu'un soutien (20) pour l'aboutement du support (3), dans lequel le film (4) peut être raccordé au support (3) dans une zone de raccordement (11), toutefois pas dans une zone de non raccordement (12) dans la zone de l'au moins un évidement ou une interruption (17) du masque (16) et le film (4) est formé en trois dimensions dans la zone de non raccordement (12),
**caractérisé en ce**
**que** l'appareil de laminage (14) présente une ventilation de l'évidement ou de l'interruption (8), de sorte que le film (4) soit ventilé pendant le raccordement sur le côté éloigné du support (3) dans la zone de non raccordement (12).

7. Appareil de laminage selon la revendication 6, **caractérisé en ce que** la thermode (15) ou un élément de ventilation (25) agencé entre la thermode (15) et le soutien (20) présente au moins un canal de ventilation (26) comme ventilation.

8. Appareil de laminage (14) pour le raccordement d'un film (4) avec un support (3), selon l'une quelconque des revendications 6 à 7, dans lequel l'appareil de laminage (14) présente une thermode (15) et une surface de pressage ou un masque associé (16) pour le pressage du film (4) sous l'action de la chaleur, sur le support (3), ainsi qu'un soutien (20) pour l'aboutement du support (3), **caractérisé en ce que** l'appareil de laminage (14) présente une seconde couche intermédiaire élastique (23) entre la thermode (15) d'une part et la surface de pressage ou le masque (16) d'autre part, pour l'homogénéisation de la pression de serrage et le raccordement du film (4) avec le support (3) .

9. Appareil de laminage selon les revendications 7 et 8, **caractérisé en ce que** la seconde couche intermédiaire (23) est agencée entre l'élément de ventilation (25) et la thermode (15).
